# EUROPEAN PATENT SPECIFICATION

(11) **EP 3 037 647 B1**
(45) Date of publication and mention of the grant of the patent: **25.04.2018**
(21) Application number: 14382560.2
(22) Date of filing: 23.12.2014
(51) Int. Cl.: F02K 3/115, B64D 13/08, F02C 6/08

(54) **System and method for controlling bleed air temperature**
System und Verfahren zur Steuerung der Entlüftungstemperatur
Système et procédé de commande de température d'air de purge

(43) Date of publication of application: 29.06.2016
(73) Proprietor: Airbus Defence and Space, S.A.U., 28906 Getafe - Madrid (ES)
(72) Inventor: Feíto Cabrero, Andrés, E-28906 Getafe - Madrid (ES); Redondo Carracedo, Francisco, E-28906 Getafe - Madrid (ES)
(74) Representative: ABG Patentes, S.L.

(56) References cited:
- EP-A1- 1 424 282
- EP-A2- 1 876 328
- US-A1- 2014 144 139

## Description

### TECHNICAL FIELD OF THE INVENTION

The present invention belongs to the field of auxiliary elements of an engine, particularly the elements in charge of the temperature control of a bleed air flow.

### BACKGROUND OF THE INVENTION

Air can be extracted from an early stage of an aircraft engine to be used in some applications of the aircraft. However, this bled air requires a pressure and temperature preconditioning to be used.

The hot bled air is usually cooled by a heat exchanger, which uses ambient air to reduce the temperature of the bled air. This heat exchanger may be controlled to increase or decrease the cooling power affecting the hot bled air.

Document US 2004/134208 discloses a method and apparatus for controlling the temperature of pressurized air such as bleed air from a gas turbine engine. The coolant air is caused to flow by a controlled ejector device.

The device disclosed in this document controls bleed temperature using an ejector device powered by some pressurized air.

Document US 2014/144139 discloses an air-to-air cooler for a gas turbine engine air system which has a heat exchanger, a first passage for directing a flow of cooling air through the heat exchanger, a second passage for directing a flow of hot air to be cooled through the heat exchanger. The first passage has a cooling air outlet tube disposed downstream of the heat exchanger. The cooling air outlet tube extends across the second passage between the heat exchanger and a hot air inlet of the second passage. The hot air inlet is disposed to cause incoming hot air to flow over the cooling air outlet tube upstream of the heat exchanger. The air-to-air cooler further has an ejector which drives the flow of cooling air through the first passage.

### SUMMARY OF THE INVENTION

The present invention provides an alternative solution for the aforementioned problems, by a bleed air system according to claim 1 and a method according to claim 3. In dependent claims, preferred embodiments of the invention are defined.

In a first inventive aspect, the invention provides a bleed air system of an engine comprising:
a bleed air duct, that starts in an engine bleed port, intended for receiving a bleed air flow,
a pre-cooler, placed in the bleed air duct, downstream the engine bleed port,
a ram air duct, a part thereof being in fluid communication with the pre-cooler, having an inlet and an outlet,
a flap, located in the ram air duct, and arranged in a flap position, adapted to be moved by an actuator to modify the inlet section of the ram air duct, between a first position, where the inlet section is maximum, and a second position, where the inlet section is minimum,
at least one ejector placed in the ram air duct downstream the precooler adapted to generate an induced cooling flow in the ram air duct,
an ejector valve for each ejector,
a temperature sensor, located in the bleed air duct downstream the pre-cooler adapted to measure the duct temperature
a pressure sensor, located in an ejector valve, adapted to measure the ejector pressure,
a flap position sensor, and
control means, adapted to operate either in a first control mode, controlling the duct temperature by acting on the actuator or in a second control mode, controlling the duct temperature by acting on the ejector valve.

The presence of a flap in the bleed air system of the invention allows the control of the inlet air needed by this system. As the ram air duct causes a greater drag the more the ram air is open, controlling the flap ensures the minimum possible drag for every value of cooling need of the system.

The structure of this bleed air system allows the use of it in a wide range of engines, including turboprop engines and turbofan engines; there is no need of installing it on a turbofan engine, as it occurs in the bleed air system mentioned in the prior art.

In a particular embodiment, the bleed air system further comprises a deflector located in the ram air duct outlet.

The presence of the deflector in the ram air duct outlet allows a better aerodynamic performance, thus improving the amount of cold air passing through the ram air channel.

In a second inventive aspect, the invention provides a method for controlling the temperature of a bleed air flow in a bleed air system according to any of previous claims, the method comprising the steps of:
sensing a duct temperature, in the bleed air duct downstream the pre-cooler, by the temperature sensor,
sensing an ejector pressure, in an ejector valve, by the pressure sensor,
measuring the flap position, by the flap position sensor,
establishing a target value in terms of temperature variation,
setting the operation of the bleed air system in either a first mode where the control means act on the actuator, or in a second mode, where the control means act on the ejector valve, the choice being based on the flap position and the ejector pressure,
calculating a new target value, which in the event the bleed air system is operating in the first mode, the new target value is a target flap position and in the event the bleed air system is operating in the second mode, the new target value is a target ejector pressure,
acting either on the actuator or on the ejector valve so that the flap or the ejectors acquire the new target value.

The steps of this method allows the system to perform with a better dynamic response time to bleed transients, due to the continuous control of ejector pressure instead of simply opening or closing ejectors.

In a particular embodiment, the step of establishing a target value in terms of temperature variation is carried out by means of a PID algorithm, using the measured value of duct temperature as data source.

In a particular embodiment, the step of establishing a target value in terms of temperature variation is carried out by means of a PID algorithm, further using ejector pressure and flap position as data source.

In a particular embodiment, the choice of setting the operation of the bleed air system either in a first mode or a second mode is carried out based on the following pattern:
if the flap position is not the first position, the control means set the system in the first mode,
if the ejector pressure is greater than 0 Pa, the control means set the system in the second mode,
if the flap position is the first position and the ejector pressure equals 0 Pa, the control means uses the target action of the PID algorithm to determine in which mode the bleed air system is set.

In a particular embodiment, the step of acting on the actuator is calculated with a PID algorithm, using the measured flap position and the target flap position as inputs.

In a particular embodiment, the step of actuating on the actuator is calculated with a PID algorithm, using the measured ejector pressure and the target ejector pressure as inputs.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig 1.: This figure shows a particular embodiment of a bleed air system according to the invention.
- Fig 2.: This figure shows the ram air duct of a bleed air system according to the invention with the flap in an intermediate position.
- Fig 3.: This figure shows the ram air duct of a bleed air system according to the invention with the flap in the first position, which is the most open position.

### DETAILED DESCRIPTION OF THE INVENTION

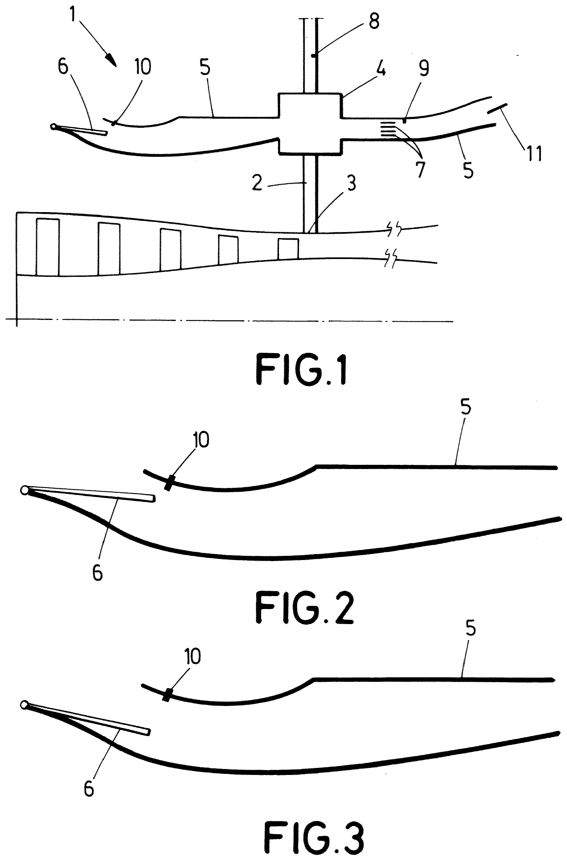

Figure 1 presents a particular embodiment of a bleed air system (1) according to the invention. This bleed air system (1) comprises:
a bleed air duct (2), that starts in an engine bleed port (3), intended for receiving a bleed air flow from the engine bleed port (3),
a pre-cooler (4), placed in the bleed air duct (2), downstream the engine bleed port (3),
a ram air duct (5), a part thereof being in fluid communication with the pre-cooler (4), having an inlet and an outlet,
a flap (6), located in the inlet section of the ram air duct (5), and arranged in a flap position, adapted to be moved by an actuator to modify the inlet section of the ram air duct (5), between a first position, where the inlet section is maximum, and a second position, where the inlet section is minimum,
at least one ejector (7) placed in the ram air duct (5) downstream the precooler (4) adapted to generate an induced cooling flow in the ram air duct (5),
an ejector valve for each ejector (7),
a temperature sensor (8), located in the bleed air duct (2) downstream the pre-cooler (4) adapted to measure the duct temperature
a pressure sensor (9), located in an ejector valve, adapted to measure the ejector pressure,
a flap position sensor (10),
a deflector (11) located in the ram air duct outlet, and
control means.

The induced cooling flow generated by the at least one ejector (7) is added to the existing flow through the ram air duct (5) in the event the latter exists.

The temperature sensor (8) senses a duct temperature, which is the temperature in the bleed air duct (2) downstream the pre-cooler (4),

The pressure sensor (9) senses the ejector pressure, which is the gauge pressure measured downstream the ejector valve.

The flap position sensor (10) measures the flap position.

The deflector (11) located in the outlet of the ram air duct is intended to increase the ram air flow when ejectors are not being operated and prevent the existence of reverse flow in the ram air duct.

This bleed air system (1) is used to perform a method of controlling the temperature of a bleed air flow according to the invention.

A particular embodiment of such a method comprises the following stages:

### First stage: measurements

This stage comprises:
sensing a duct temperature, in the bleed air duct downstream the pre-cooler, by means of the temperature sensor,
sensing the ejector pressure, in the ejector valve, by means of the pressure sensor,
measuring the flap position, by means of the flap position sensor,

### Second stage: PID algorithm

The control means uses these data as a source for a PID algorithm. This algorithm comprises in turn the following steps:
In a first algorithm step, the value of duct temperature is used to establish a target value. This target value is a temperature variation, which may be positive or negative, and corresponds to the variation that is needed to reach a predetermined ideal temperature in the bleed air duct (2) downstream the pre-cooler (4).

The control means then sets the operation of the bleed air system (1) in one of these two modes:
a first mode, where the control means actuate on the actuator, or
a second mode, where the control means actuate on the ejector valve.

This choice is based on the sensed ejector pressure and the measured flap position, in the following way:
If the flap position is not the first position, the control means set the system in the first mode.
If the ejector pressure is greater than 0 Pa, the control means set the system in the second mode.
If the flap position is in the first position and the ejector pressure equals 0 Pa, the control means uses the target action of the PID algorithm to determine in which mode the bleed air system is set: if the target value is positive, the control means set the system in the first mode, and if the target value is negative, the control means set the system in the second mode.

### Third stage: calculating of a new target value

Depending on the target value and on the sensed ejector pressure and on the measured flap position, the control means calculate a new target value:
If the bleed air system is set in the first mode, the target value is a target flap position
If the bleed air system is set in the second mode, the target value is a target ejector pressure.

### Fourth stage: actuating on the system

If the bleed air system is in the first mode, the control means act on the actuator to reach the target flap position. In a particular embodiment, the command for acting on the actuator is calculated with a PID algorithm, using the measured flap position and the target flap position as inputs.

If the bleed air system is in the second mode, the control means actuate on the ejector valve to reach the target ejector pressure. In a particular embodiment, the command for actuating on the actuator is calculated with a PID algorithm, using the measured ejector pressure and the target ejector pressure as inputs.

## Claims

1. Bleed air system (1) of an engine comprising:
a bleed air duct (2), that starts in an engine bleed port (3), intended for receiving a bleed air flow,
a pre-cooler (4), placed in the bleed air duct (2), downstream the engine bleed port (3),
a ram air duct (5), a part thereof being in fluid communication with the pre-cooler (4), having an inlet and an outlet,
a flap (6), located in the ram air duct (5), and arranged in a flap position, adapted to be moved by an actuator to modify the inlet section of the ram air duct (5), between a first position, where the inlet section is maximum, and a second position, where the inlet section is minimum,
at least one ejector (7) placed in the ram air duct (5) downstream the precooler (4) adapted to generate an induced cooling flow in the ram air duct (5),
an ejector valve for each ejector (7),
a temperature sensor (8), located in the bleed air duct (2) downstream the pre-cooler (4) adapted to measure the duct temperature
a pressure sensor (9), located in an ejector valve, adapted to measure an ejector pressure,
a flap position sensor (10), and
control means, configured to operate either, in a first control mode, controlling the duct temperature by acting on the actuator, or in a second control mode, controlling the duct temperature by acting on the ejector valve.

2. Bleed air system (1) according to claim 1, further comprising a deflector (11) located in the ram air duct outlet.

3. Method for controlling the temperature of a bleed air flow in a bleed air system according to any of previous claims, the method comprising the steps of:
sensing a duct temperature, in the bleed air duct (2) downstream the pre-cooler (4), by the temperature sensor (8),
sensing an ejector pressure, in an ejector valve, by the pressure sensor (9),
measuring the flap position, by the flap position sensor (10),
establishing a target value in terms of temperature variation,
setting the operation of the bleed air system in either, a first mode where the control means actuate on the actuator, or in a second mode, where the control means actuate on the ejector valve, the choice being based on the flap position and the ejector pressure,
calculating a new target value, which in the event the bleed air system is operating in the first mode, the new target value is a target flap position and in the event the bleed air system is operating in the second mode, the new target value is a target ejector pressure,
actuating either on the actuator or on the ejector valve so that the flap or the ejectors acquires the new target value.

4. Method for controlling the temperature according to claim 3, wherein the step of establishing a target value in terms of temperature variation is carried out by means of a PID algorithm, using the measured value of duct temperature as data source.

5. Method for controlling the temperature according to claim 4, wherein the step of establishing a target value in terms of temperature variation is carried out by means of a PID algorithm, further using ejector pressure and flap position as data source.

6. Method for controlling the temperature according to any claims 3 to 5, wherein the choice of setting the operation of the bleed air system either in a first mode or a second mode is carried out based on the following pattern:
if the flap position is not the first position, the control means set the system in the first mode,
if the ejector pressure is greater than 0 Pa, the control means set the system in the second mode,
if the flap position is the first position and the ejector pressure equals 0 Pa, the control means uses the target action of the PID algorithm to determine in which mode the bleed air system is set.

7. Method for controlling the temperature according to any claims 3 to 6, wherein the step of actuating on the actuator is calculated with a PID algorithm, using the measured flap position and the target flap position as inputs.

8. Method for controlling the temperature according to any claims 3 to 7, wherein the step of actuating on the actuator is calculated with a PID algorithm, using the measured ejector pressure and the target ejector pressure as inputs.

## Patentansprüche

1. Zapfluft-System (1) eines Motors, umfassend:
eine Zapfluft-Leitung (2), welche in einem Motor-Zapfanschluss (3) beginnt, vorgesehen zum Aufnehmen einer Zapfluft-Strömung,
einen Vorkühler (4), welcher in der Zapfluft-Leitung (2) stromabwärts des Motor-Zapfanschlusses (3) platziert ist,
eine Stauluft-Leitung (5), wobei ein Teil davon in Fluidverbindung mit dem Vorkühler (4) steht, einen Einlass und einen Auslass aufweisend,
eine Klappe (6), welche in der Stauluft-Leitung (5) angeordnet und in einer Klappenposition angeordnet ist, dazu eingerichtet, durch einen Aktuator bewegt zu werden, um den Einlassquerschnitt der Stauluft-Leitung (5) zwischen einer ersten Position, in welcher der Einlassquerschnitt maximal ist, und einer zweiten Position, in welcher der Einlassquerschnitt minimal ist, zu modifizieren,
wenigstens einen in der Stauluft-Leitung (5) stromabwärts des Vorkühlers (4) platzierten Ejektor (7), welcher dazu eingerichtet ist, einen induzierten Kühlstrom in der Stauluft-Leitung (5) zu erzeugen,
ein Ejektorventil für jeden Ejektor (7),
einen Temperatursensor (8), welcher in der Zapfluft-Leitung (2) stromabwärts des Vorkühlers (4) angeordnet ist, dazu eingerichtet, die Leitungstemperatur zu messen,
einen Drucksensor (9), welcher in einem Ejektorventil angeordnet ist, dazu eingerichtet, einen Ejektordruck zu messen,
einen Klappenposition-Sensor (10), und
Steuer-/Regelmittel, welche dazu eingerichtet sind, entweder in einem ersten Steuer-/Regelmodus die Leitungstemperatur durch Wirken auf den Aktuator zu steuern/regeln oder in einem zweiten Steuer-/Regelmodus die Leitungstemperatur durch Wirken auf das Ejektorventil zu steuern/regeln.

2. Zapfluft-System (1) nach Anspruch 1, ferner umfassend ein in dem Stauluft-Leitungsauslass angeordnetes Ablenkelement (11).

3. Verfahren zum Steuern/Regeln der Temperatur von einer Zapfluft-Strömung in einem Zapfluft-System nach einem der vorhergehenden Ansprüche, wobei das Verfahren die Schritte umfasst:
Erfassen einer Leitungstemperatur in der Zapfluft-Leitung (2) stromabwärts des Vorkühlers (4) durch den Temperatursensor (8),
Erfassen eines Ejektordrucks in einem Ejektorventil durch den Drucksensor (9),
Messen der Klappenposition durch den Klappenposition-Sensor (10),
Erstellen eines Sollwerts hinsichtlich einer Temperaturvariation,
Setzen des Betriebs des Zapfluft-Systems in entweder einen ersten Modus, in welchem die Steuer-/Regelmittel auf den Aktuator aktuieren, oder in einen zweiten Modus, in welchem die Steuer-/Regelmittel auf das Ejektorventil aktuieren, wobei die Auswahl auf der Klappenposition und dem Ejektordruck basiert,
Berechnen eines neuen Sollwerts, wobei in dem Fall, dass das Zapfluft-System in dem ersten Modus arbeitet, der neue Sollwert eine Soll-Klappenposition ist, und in dem Fall, dass das Zapfluft-System in dem zweiten Modus arbeitet, der neue Sollwert ein Soll-Ejektordruck ist, Aktuieren auf entweder den Aktuator oder auf das Ejektorventil, so dass die Klappe oder die Ejektoren den neuen Sollwert einnimmt.

4. Verfahren zum Steuern/Regeln der Temperatur nach Anspruch 3, wobei der Schritt des Erstellens eines Sollwerts hinsichtlich einer Temperaturvariation mittels eines PID-Algorithmus unter Verwendung des gemessenen Werts der Leitungstemperatur als Datenquelle durchgeführt wird.

5. Verfahren zum Steuern/Regeln der Temperatur nach Anspruch 4, wobei der Schritt des Erstellens eines Sollwerts hinsichtlich einer Temperaturvariation mittels eines PID-Algorithmus ferner unter Verwendung eines Ejektordrucks und einer Klappenposition als Datenquelle durchgeführt wird.

6. Verfahren zum Steuern/Regeln der Temperatur nach einem der Ansprüche 3 bis 5, wobei die Auswahl des Setzens des Betriebs des Zapfluft-Systems in entweder einen ersten Modus oder einen zweiten Modus basierend auf dem folgenden Muster durchgeführt wird:
wenn die Klappenposition nicht die erste Position ist, setzen die Steuer/Regelmittel das System in den ersten Modus,
wenn der Ejektordruck größer als 0 Pa ist, setzen die Steuer-/Regelmittel das System in den zweiten Modus,
wenn die Klappenposition die erste Position ist und der Ejektordruck gleich 0 Pa ist, verwenden die Steuer-/Regelmittel die Sollwirkung des PID-Algorithmus, um zu bestimmen, in welchen Modus das Zapfluft-System gesetzt wird.

7. Verfahren zum Steuern/Regeln der Temperatur nach einem der Ansprüche 3 bis 6, wobei der Schritt des Aktuierens auf den Aktuator mit einem PID-Algorithmus unter Verwendung der gemessenen Klappenposition und der Soll-Klappenposition als Eingaben berechnet wird.

8. Verfahren zum Steuern/Regeln der Temperatur nach einem der Ansprüche 3 bis 7, wobei der Schritt des Aktuierens auf den Aktuator mit einem PID-Algorithmus unter Verwendung des gemessenen Ejektordrucks und des Soll-Ejektordrucks als Eingaben berechnet wird.

## Revendications

1. Système d'air de purge (1) d'un moteur comprenant :
un conduit d'air de purge (2), qui débute dans un orifice de purge de moteur (3), destiné à recevoir un écoulement d'air de purge,
un pré-refroidisseur (4), placé dans le conduit d'air de purge (2), en aval de l'orifice de purge de moteur (3),
un conduit d'air dynamique (5), dont une partie est en communication fluide avec le pré-refroidisseur (4), ayant une entrée et une sortie,
un clapet (6), disposé dans le conduit d'air dynamique (5), et disposé dans une position de clapet, adapté pour être déplacé par un actionneur pour modifier la section d'entrée du conduit d'air dynamique (5), entre une première position, où la section d'entrée est maximale, et une seconde position où la section d'entrée est minimale,
au moins un éjecteur (7) placé dans le conduit d'air dynamique (5) en aval du pré-refroidisseur (4) adapté pour produire un écoulement de refroidissement induit dans le conduit d'air dynamique (5),
une vanne d'éjecteur pour chaque éjecteur (7),
un capteur de température (8), disposé dans le conduit d'air de purge (2) en aval du pré-refroidisseur (4) adapté pour mesurer la température de conduit,
un capteur de pression (9), disposé dans une vanne d'éjecteur, adapté pour mesurer une pression d'éjecteur,
un capteur de position de clapet (10), et
un moyen de contrôle, configuré pour opérer soit, dans un premier mode de contrôle, le contrôle de la température de conduit en actionnant l'actionneur, soit dans un second mode de contrôle, le contrôle de la température de conduit en actionnant la vanne d'éjecteur.

2. Système d'air de purge (1) selon la revendication 1, comprenant de plus un déflecteur (11) disposé dans la sortie de conduit d'air dynamique.

3. Procédé de contrôle de la température d'un écoulement d'air de purge dans un système d'air de purge selon l'une quelconque des revendications précédentes, le procédé comprenant les étapes de :
détection d'une température de conduit, dans le conduit d'air de purge (2) en aval du pré-refroidisseur (4), par le capteur de température (8),
détection d'une pression d'éjecteur, dans une vanne d'éjecteur, par le capteur de pression (9),
mesure de la position de clapet, par le détecteur de position de clapet (10),
établissement d'une valeur cible en termes de variation de température,
réglage de l'opération du système d'air de purge soit, dans un premier mode où le moyen de contrôle actionne l'actionneur, soit dans un second mode, où le moyen de contrôle actionne la vanne d'éjecteur, le choix étant basé sur la position de clapet et la pression d'éjecteur,
calcul d'une nouvelle valeur cible, laquelle dans le cas où le système d'air de purge fonctionne dans le premier mode, la nouvelle valeur cible est une position de clapet cible et dans le cas où le système d'air de purge fonctionne dans le second mode, la nouvelle valeur cible est une pression d'éjecteur cible,
actionnement soit de l'actionneur, soit de la vanne d'éjecteur de sorte que le clapet ou les éjecteurs acquièrent la nouvelle valeur cible.

4. Procédé de contrôle de la température selon la revendication 3, où l'étape d'établissement d'une valeur cible en termes de variation de température est réalisée au moyen d'un algorithme PID, utilisant la valeur mesurée de température de conduit comme source de données.

5. Procédé de contrôle de la température selon la revendication 4, où l'étape d'établissement d'une valeur cible en termes de variation de température est réalisée au moyen d'un algorithme PID, utilisant de plus une pression d'éjecteur et une position de clapet comme source de données.

6. Procédé de contrôle de la température selon l'une quelconque des revendications 3 à 5, où le choix de réglage de l'opération du système d'air de purge soit dans un premier mode, soit dans un second mode est réalisé sur la base du motif suivant :
si la position de clapet n'est pas la première position, le moyen de contrôle règle le système dans le premier mode,
si la pression d'éjecteur est supérieure à 0 Pa, le moyen de contrôle règle le système dans le second mode,
si la position de clapet est la première position et la pression d'éjecteur est égale à 0 Pa, le moyen de contrôle utilise l'action cible de l'algorithme PID pour déterminer dans quel mode le système d'air de purge est réglé.

7. Procédé de contrôle de la température selon l'une quelconque des revendications 3 à 6, où l'étape d'actionnement de l'actionneur est calculée avec un algorithme PID, utilisant la position de clapet mesurée et la position de clapet cible comme entrées.

8. Procédé de contrôle de la température selon l'une quelconque des revendications 3 à 7, où l'étape d'actionnement de l'actionneur est calculée avec un algorithme PID, utilisant la pression d'éjecteur mesurée et la pression d'éjecteur cible comme entrées.
